# EUROPÄISCHE PATENTSCHRIFT

(11) **EP 2 676 308 B1**
(45) Veröffentlichungstag und Bekanntmachung des Hinweises auf die Patenterteilung: **03.06.2015**
(21) Anmeldenummer: 12704779.3
(22) Anmeldetag: 16.02.2012
(51) Int. Cl.: H01M 2/10, H01M 10/42

(54) **ANORDNUNG UMFASSEND MINDESTENS EINE ELEKTRO-CHEMISCHE ZELLE SOWIE EIN KRAFTFAHRZEUG MIT EINER ENTSPRECHENDEN ANORDNUNG**
ARRANGEMENT COMPRISING AT LEAST ONE ELECTROCHEMICAL CELL AND A MOTOR VEHICLE COMPRISING A CORRESPONDING ARRANGEMENT
DISPOSITIF COMPORTANT AU MOINS UNE CELLULE ÉLECTROCHIMIQUE ET VÉHICULE À MOTEUR COMPORTANT UN DISPOSITIF CORRESPONDANT

(30) Priorität: 17.02.2011 DE 102011004282
(43) Veröffentlichungstag der Anmeldung: 25.12.2013
(73) Patentinhaber: Robert Bosch GmbH, 70442 Stuttgart (DE); SAMSUNG SDI CO., LTD., Yongin-si, Gyeonggi-do 446-577 (KR)
(72) Erfinder: WICKERT, Stefan, 73095 Albershausen (DE); SHARMA, Prashant, 70439 Stuttgart (DE)
(74) Vertreter: Bee, Joachim
(86) Internationale Anmeldenummer: PCT/EP2012/052673
(87) Internationale Veröffentlichungsnummer: WO 2012/110592

(56) Entgegenhaltungen:
- DE-A1-102008 034 889
- DE-U1-202010 012 151
- GB-A- 2 416 652
- JP-A- 2008 010 225
- US-A1- 2006 108 979

## Beschreibung

Die vorliegende Erfindung betrifft eine Anordnung umfassend mindestens eine elektro-chemische Zelle mit einem Gehäuse sowie ein Kraftfahrzeug mit einer entsprechenden Anordnung, welche insbesondere einsetzbar ist um eine Entnahme, insbesondere eine unbefugte Entnahme, von elektro-chemischen Zellen zu verhindern.

### Stand der Technik

Die Batterie ist eines der wichtigsten und kostspieligsten Teile eines Elektro- oder Hybridfahrzeugs. Aus diesem Grunde fordern die meisten Erstausrüster (Original Equipment Manufacturer, OEM) von den Lieferanten von Batteriepacks, dass diese eine Garantie für ihre Batterien geben. Auch neben den OEM-Anforderungen werden solche Garantien z.B. von der Gesetzgebung für emissionsfreie Fahrzeuge (Zero Emission Vehicle, ZEV) verlangt. Normalerweise liegt der Zeitraum, für den Garantie gefordert wird, zwischen fünf und zehn Jahren. Ein weiterer wichtiger Aspekt sind die Kosten. Batteriepacks kosten mehrere tausend Euro, und wenn sie von dem OEM an den Lieferanten zurückgesandt werden, ist es äußerst kostenaufwändig, eine gebrauchte Batterie durch eine neue zu ersetzen.

Da dieser Garantiezeitraum und die Kosten für Batterien nicht mit denen für andere Fahrzeugteile vergleichbar sind, ist es für die Lieferanten der Batterien wichtig, durch spezielle Maßnahmen sicherzustellen, dass die Batterie nicht durch eine nichtbefugte Person (unsachgemäß) behandelt wurde.

Unsachgemäße Behandlungen können z.B. beruhen
- auf falschem Laden/Entladen der Batterie und/oder
- auf dem Austausch einer fehlerfreien Batterie durch eine fehlerbehaftete oder alte Batterie.

Eine Fehlbehandlung durch falsches Laden/Entladen kann nach dem Stand der Technik erkannt werden, indem ein Batteriedatenaufzeichnungsgerät eingesetzt wird, welches den in die Batterie eingespeisten bzw. aus der Batterie entnommenen Strom während des Ladens bzw. Entladens aufzeichnet und den Ladezustand in einem Speichermedium, wie z.B. einem elektrisch löschbaren programmierbaren Nur-Lese-Speicher (Electrically Erasable Programmable Read-Only Memory, EEPROM) oder einem Flash-EEPROM, speichert. Diese Aufzeichnungen können zu einem späteren Zeitpunkt außerhalb der Batterie (off board) für Analysezwecke oder eine Gültigkeitsprüfung der Garantieansprüche ausgewertet werden.

Ein Verfahren zur Identifizierung einer Handwerkzeugmaschine ist aus der Veröffentlichung DE 10 2007 007 506 A1 bekannt. Dort wird zum Nachweis, ob es sich bei einem beschädigten Werkzeug um ein Originalteil handelt, vorgeschlagen, zur Identifizierung der Handwerkzeugmaschine das Gehäuse der Handwerkzeugmaschine zumindest zum Teil aus einem Kunststoff herzustellen, dem eine Indikatorkomponente beigemischt ist.

Aus der DE202010012151 U1 ist ein Batteriepack, der zum Zuführen von Elektroenergie zu einem Elektrowerkzeug ausgebildet ist, mit einer Mehrzahl von Batteriemodulen, einem Batteriepackkörper, der zum entnehmbaren Aufnehmen der Mehrzahl von Batteriemodulen, elektrischen Verbinden der Mehrzahl von Batteriemodulen und Abgeben von Elektroenergie von der Mehrzahl von Batteriemodulen an das Elektrowerkzeug ausgebindet ist, einem bewegbaren Bauteil, das dazu ausgebildet ist, bezüglich des Batteriepackkörpers in eine erste Position und aus derselben bewegbar zu sein und in der ersten Position das Anbringen der Mehrzahl von Batteriemodulen an und die Entnahme derselben aus dem Batteriepackkörper zu verhindern, mindestens einem Sensor, der zum

Detektieren, ob sich das bewegbare Bauteil in der ersten Position befindet oder nicht, ausgebildet ist, und einer Steuerung,
die zum Durchführen mindestens eines vorbestimmten Prozesses basierend auf einer Detektion durch den mindestens einen Sensor ausgebildet ist, bekannt.

Die JP2008010225 A offenbart eine Montagevorrichtung für eine Batterieabdeckung, wobei eine Mutter eine Schraubeneinsetzöffnung in einem Schraubenloch vorsieht, wobei ein Gewindeelement in die Schraubeneinsetzöffnung eingesetzt ist.

Aus der US2006/108979 A1 ist eine wiederaufladbare Batteriebaugruppe bekannt, umfassend: eine wiederaufladbare Batterieeinheit ; und einen Daten- und Stromanschlussstecker ; wobei die Batteriebaugruppe aufweist: eine Betriebskonfiguration, in der die Batteriebaugruppe generell Form und Funktionen eines herkömmlichen Batterieformats aufweist und bei der der Daten- und Stromanschlussstecker unzugänglich ist sowie eine Wiederaufladekonfiguration, in der der Daten- und Stromanschlussstecker zugänglich wird, indem der Daten- und Stromanschlussstecker bewegt und/oder indem ein Teil bzw. mehrere andere Teile der Batteriebaugruppe bewegt werden, damit der Daten- und Stromanschlussstecker an eine geeignete Steckdose an einem Rechner oder Peripheriegerät zum Wiederaufladen der Batteriebaugruppe angeschlossen werden kann, wobei es sich bei dem Anschlussstecker um einen USB-Anschluss handelt.

Die DE102008034889 A1 betrifft eine Batterie mit einer in einem Batteriegehäuse angeordneten Wärmeleitplatte zum Temperieren der Batterie, wobei mehrere elektrisch parallel und/oder seriell miteinander verschaltete Einzelzellen Wärme leitend mit der Wärmeleitplatte verbunden sind und zumindest ein elektronisches Bauelement als eine gekapselte elektronische Baueinheit ausgebildet ist, die in dem Batteriegehäuse angeordnet ist. Erfindungsgemäß weist das Batteriegehäuse eine Einfüllöffnung zum Einfüllen eines Isolationsmittels auf.

Für die Verhinderung des Austauschs einer funktionsfähigen Batterie gegen eine fehlerhafte bzw. alte oder zumindest für die Registrierung eines Zugriffs auf die Batterie ist bisher keine Lösung bekannt.

### Offenbarung der Erfindung

Die vorliegende Erfindung ist eine Anordnung umfassend mindestens eine elektro-chemische Zelle und ein die mindestens eine elektro-chemische Zelle enthaltendes Gehäuse, wobei das Gehäuse einen Verschluss aufweist, dadurch gekennzeichnet, dass die Anordnung so eingerichtet ist, dass bei verriegeltem Verschluss eine Entnahme oder eine unregistrierte Entnahme einer oder mehrerer der elektro-chemischen Zellen aus dem Gehäuse verhindert wird, wobei zum Entriegeln des Verschlusses eine Authentifizierung erforderlich ist.

Zusätzlich bezieht sich die Erfindung auf ein Kraftfahrzeug mit einem elektrischen Antriebsmotor zum Antreiben des Kraftfahrzeugs welches die Anordnung umfasst.

Ein besonderer Vorteil der Erfindung besteht darin, dass aus einem Batteriepack durch unbefugte Personen keine Batterie bzw. elektro-chemische Zelle entnommen und beispielsweise gegen eine andere Batterie bzw. eine andere elektrochemische Zelle ausgetauscht werden kann. Dies wird erreicht, indem erfindungsgemäß eine Anordnung vorgesehen ist, welche zumindest eine elektro-chemische Zelle und ein Gehäuse umfasst, welches die zumindest eine elektro-chemische Zelle umfasst. Das Gehäuse weist weiter einen Verschluss auf, und die Anordnung, vorzugsweise das Gehäuse, ist so ausgestaltet, dass bei verriegeltem Verschluss ein Zugriff auf die in dem Gehäuse befindliche zumindest eine elektro-chemische Zelle nicht möglich ist. Bei verriegeltem Verschluss kann die zumindest eine elektro-chemische Zelle oder auch nur eine einzelne elektro-chemische Zelle nicht aus dem Gehäuse entnommen werden. Vorzugsweise ist das Gehäuse mit der zumindest einen elektro-chemischen Zelle als Batteriepack realisiert.

Eine alternative, nicht beanspruchte Anordnung sieht vor, dass bei verriegeltem Verschluss zwar auf die zumindest eine elektro-chemische Zelle zugegriffen und eine oder mehrere elektro-chemische Zellen aus dem Gehäuse entnommen werden können. Ein solcher Zugriff kann beispielsweise realisiert werden, indem ein Verschluss eingesetzt wird, der ggf. unter erhöhtem Kraftaufwand geöffnet werden kann, obwohl er verriegelt ist. In einer bevorzugten Ausführung der Erfindung ist ein magnetischer, vorzugsweise elektromagnetischer, Verschluss vorgesehen. Dabei kann die Verschlusskraft des Magneten vorgegeben sein, so dass der Verschluss bei Übersteigen dieser vorgegebenen Kraft (ohne Authentifizierung) geöffnet werden kann. In einer anderen bevorzugten Ausführungsform ist vorgesehen, dass das Gehäuse eine Sollbruchstelle aufweist, die bricht und den Zugang zu der zumindest einen elektro-chemischen Zelle ermöglicht, ohne dass der Verschluss entriegelt wird. Dabei dient die erbrochene Sollbruchstelle als Registrierung dafür, dass das Gehäuse geöffnet und eine Entnahme von elektro-chemischen Zellen ermöglicht wurde. Desgleichen ist in einer bevorzugten Ausführungsform vorgesehen, dass zumindest ein Öffnen des nicht entriegelten Verschlusses, vorzugsweise aber auch ein Öffnen des Gehäuses bei entriegeltem Verschluss, (ebenfalls) registriert wird. Da erfindungsgemäß eine Entnahme von elektro-chemischen Zellen bei verriegeltem Verschluss nicht möglich ist, wird somit durch das Registrieren des Öffnens des Gehäuses zumindest die Möglichkeit der Entnahme einer oder mehrerer elektro-chemischer Zellen registriert.

In einer bevorzugten Ausführungsform des erfindungsgemäßen Verfahrens ist vorgesehen, dass zumindest ein Öffnen des Batteriepacks durch unbefugte Personen, vorzugsweise aber jedes Öffnen, in einem nichtlöschbaren Speichermittel dokumentiert wird. Hierfür erweist es sich als vorteilhaft, wenn zumindest Angaben über Datum, Uhrzeit des Ereignisses des Öffnens, der Kilometerstand zum Zeitpunkt des Öffnens, Kennung einer öffnenden Person oder dergleichen erfasst und aufgezeichnet werden. Das hat den Vorteil, dass mit Hilfe dieser Informationen die Umstände genauer bewertet werden können, die für die Beurteilung der Garantieansprüche von Bedeutung sind. Eine bevorzugte Ausführungsform der Erfindung sieht vor, dass als Speichermedium ein Ringspeicher genutzt wird. Damit wird die Speichernutzung optimiert, da nur ein Speicherplatz von vorgegebener Größe genutzt wird, indem bei dem Einspeichern eines neuen Eintrags ältere Einträge aus dem Speicher "herausgeschoben" werden, wenn der Speicher voll ist. Vorzugsweise erfolgen zumindest die Detektion und/oder die Aufzeichnung der Angaben automatisch.

In Entriegeln des Verschlusses nur nach vorher erfolgter Authentifizierung möglich ist. Das hat insbesondere den Vorteil, dass dadurch festgestellt werden kann, ob das Gehäuse durch eine dazu befugte Person geöffnet wurde. Durch eine Aufzeichnung der oben genannten Angaben können darüber hinaus (später) weitere Einzelheiten über das Öffnen des Gehäuses ausgewertet werden, wie beispielsweise wann und durch wen das Gehäuse geöffnet wurde. Somit kann geprüft werden, ob Gewährleistungsansprüche bestehen oder nicht. Eine bevorzugte Ausführungsform sieht hierfür vor, dass die Anordnung Eingabemittel für eine Eingabe von Daten für eine Authentifizierung, wie beispielsweise einer Kennung oder dergleichen. und eine Auswerteeinheit zur Auswertung der eingegebenen Daten umfasst. In Abhängigkeit des Ergebnisses der Auswertung wird der Verschluss vorzugsweise automatisch entriegelt. In einer weiteren bevorzugten Ausführungsform umfasst die Anordnung weiter Mittel für eine Datenausgabe, wie beispielsweise ein Display, einen Lautsprecher oder dergleichen, über die einem Nutzer beispielsweise das Ergebnis der Auswertung mitgeteilt wird. Vorzugsweise sind die Mittel zur Datenein- und -ausgabe sowie die Mittel zur Datenauswertung so eingerichtet, dass die Authentifizierung in Form eines Dialogs ausführbar ist. Das ist insbesondere deshalb vorteilhaft, weil bei einer solchen Authentifizierung in Dialogform eine höhere Sicherheit vor unbefugtem Öffnen erreicht werden kann, indem durch die Anordnung zeit-, personen- und/oder situationsbedingte Anforderungen an einen Nutzer, der das Gehäuse öffnen will, gestellt werden können. Vorzugsweise werden zur Authentifizierung innerhalb des Dialogs zumindest teilweise Befehle eines einheitlichen Diagnoseservice (Unified Diagnostic Service, UDS) zwischen der ein Öffnen begehrenden Person und der Auswerteeinheit ausgetauscht.

Als vorteilhaft erweist es sich auch, wenn die Anordnung, vorzugsweise das Gehäuse oder das Batteriepack, eine Batteriesteuereinheit (Battery Control Unit, BCU) umfasst, wobei die Batteriesteuereinheit so eingerichtet ist, dass zumindest die Authentifizierung durch die Batteriesteuereinheit ausgeführt wird und/oder die Überwachung des Öffnens des Gehäuses durch die Batteriesteuereinheit erfolgt. Das ist deswegen vorteilhaft, weil Batteriepacks in der Regel bereits eine Batteriesteuereinheit umfassen und somit bei der Realisierung der Erfindung auf bereits vorhandene Soft- und Hardware zurückgegriffen und daher Material- und Entwicklungsaufwand reduziert werden kann.

Als vorteilhaft erweist es sich, wenn die BCU eine Hardware-Schaltsperre wie beispielsweise einen Hochspannungsübenivachungskreis (High Voltage Interlock Loop, HVIL) umfasst und die Überwachung eine Auswertung der durch die Hardware-Schaltsperre bereitgestellten Signale umfasst. Es kann sich jedoch auch als vorteilhaft erweisen; wenn die Überwachung unabhängig von der BCU erfolgt. Dabei können für die Überwachung Hardware- und/oder Softwarekomponenten vorgesehen sein.

In einer weiteren bevorzugten Ausführungsform sind Phasen vorgesehen, in denen sich die Batteriesteuereinheit in einem Ruhemodus befindet, um den Energieverbrauch zu minimieren. Die Überwachung bleibt jedoch auch aktiv, während sich die Batteriesteuereinheit im Ruhezustand befindet. Insbesondere bleibt der HVIL auch während Phasen des Ruhemodus der BCU aktiv.

Ein anderer Aspekt der Erfindung betrifft ein Kraftfahrzeug mit einem elektrischen Antriebsmotor zum Antreiben des Kraftfahrzeugs umfassend die oben beschriebene Anordnung.

Durch die Erfindung wird ein Verfahren vorgestellt, welches sicherstellt, dass Batteriepacks, die von einem OEM (nach einer Störungsmeldung) an den Lieferanten zurückgesandt wurden, tatsächlich nicht durch eine Reparaturwerkstatt, Tankstelle oder andere nichtbefugte Stellen oder Personen falsch gehandhabt worden sind.

Die Erfindung hat insbesondere den Vorteil, dass
- im Gegensatz zum Stand der Technik die Möglichkeit für die BCU besteht, zu ermitteln, ob das Batteriepack durch eine nichtbefugte Person geöffnet wurde oder nicht. Durch die Erfassung dieses Sachverhalts wird es ermöglicht, die Garantieansprüche eines OEM zu prüfen.
- Die Erfindung stellt weiter sicher, dass keine nichtbefugte Person das Batteriepack öffnen kann.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine Veranschaulichung eines Dialogs einer beispielhaften Berechtigungsabfrage, und
Figur 2 eine Veranschaulichung einer beispielhaften Speicherverwaltung für das Abspeichern von ein Öffnen dokumentierenden Angaben.

### Ausführungsformen der Erfindung

Die Erfindung wird nachfolgend anhand von zwei Ausführungsbeispielen beschrieben. Ein wichtiger Aspekt der Erfindung besteht darin, ein Batteriepack mit einem Verschlussmechanismus auszustatten. Zusätzlich ist in einer weiteren Ausführungsform vorgesehen, das Batteriepack mit einem Überwachungsmechanismus auszustatten. Dabei können Verschluss- und Überwachungsmechanismus jeweils allein oder gemeinsam in Kombination vorgesehen sein. Eine bevorzugte Ausführungsform sieht dabei vor, zur Steuerung des Überwachungs- und/oder Verschlussmechanismus den Funktionsumfang der BCU zu nutzen.

### Verschlussmechanismus:

Um ein unberechtigtes Öffnen des Batteriepacks zu verhindern, ist in einem ersten Ausführungsbeispiel ein Verschluss für das Batteriepack vorgesehen. Der Verschluss verhindert, dass das Batteriepack ohne ausreichende Authentifizierung geöffnet werden kann. Der Verschluss wird in einer beispielhaften Ausführungsform durch die BCU 102 gesteuert und überwacht. Ein Öffnen wird demnach nur ermöglicht für berechtigte Personen, wie z.B. einen berechtigten Prüfer 104.

Zum Öffnen sendet die betreffende Person eine Folge von Befehlen, wie beispielsweise von Befehlen eines einheitlichen Diagnoseservices, an die BCU 102. Anhand dieser Befehle entscheidet die BCU 102 über die Berechtigung der Person und ermöglicht in Abhängigkeit dieser Entscheidung einen Zugriff und löst den Verschluss des Batteriepacks. Vorzugsweise handelt es sich um einen magnetischen Verschluss, besonders bevorzugt um einen elektromagnetischen Verschluss.

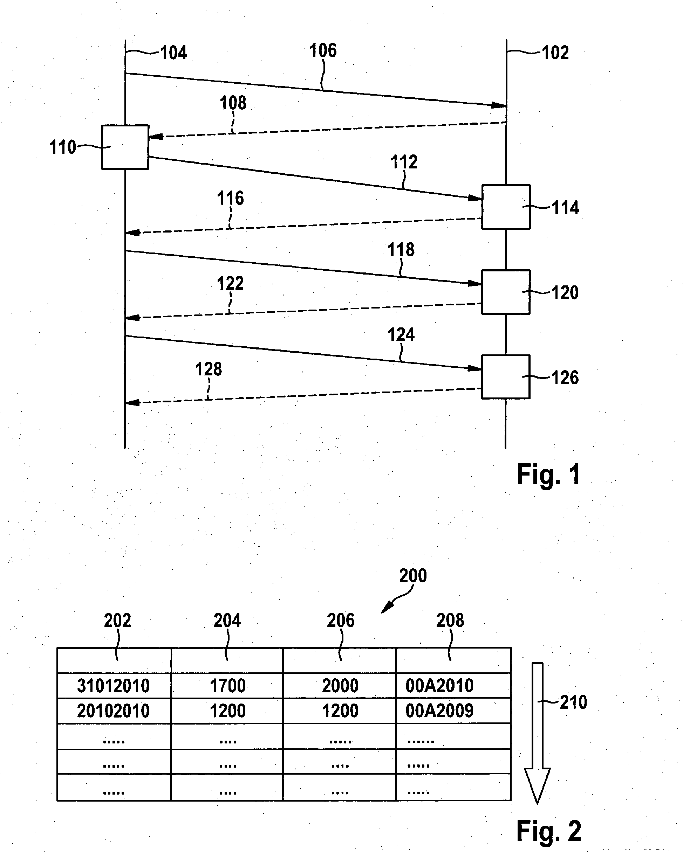

Anhand von Figur 1 wird eine beispielhafte Befehlsfolge beschrieben:

Der Prüfer 104 sendet an die BCU 102 den UDS-Befehl 106 "Security access - Request seed".

Die BCU 102 antwortet durch Senden 108 eines Keims (seed).

Der Prüfer 104 nutzt diesen Keim und berechnet in Schritt 110 einen Schlüssel unter Verwendung eines Sicherheitsalgorithmus. Der so generierte Schlüssel wird mit dem UDS-Befehl 112 "Security access - Send key" an die BCU 102 gesendet.

Die BCU 102 nutzt denselben Keim und authentifiziert in Schritt 114 den Schlüssel. Hierfür generiert die BCU 102 den Prüfschlüssel mit einem Algorithmus innerhalb des Speichers. Anschließend vergleicht die BCU 102 den vom Prüfer 104 empfangenen Schlüssel mit dem Prüfschlüssel. Stimmen die Schlüssel überein, gibt die BCU 102 durch Senden einer Nachricht 116 dem Prüfer 104 die Berechtigung für die Eingabe weiterer Befehle. Die Nachricht 116, die die BCU 102 nach der Authentifizierung sendet, kann bei fehlgeschlagener Authentifizierung auch eine Mitteilung darüber enthalten, dass der Zugriff verweigert wird.

Der Prüfer 104 sendet verschiedene Angaben 118, die ihn identifizieren, an die BCU 102, wie z.B. eine Prüfer-Kennung 208, einen Prüfertyp oder dergleichen Die BCU 102 speichert in Schritt 120 diese Angaben 118 in einem nichtlöschbaren Speicher.

Die BCU 102 signalisiert dem Prüfer 104 durch Senden einer Meldung 122 das erfolgreiche Speichern der Angaben 118.

Der Prüfer 104 sendet anschließend den UDS-Befehl 124 zum Öffnen des Batteriepacks an die BCU 102, um den magnetischen Verschluss zu öffnen, indem er den UDS-Befehl 124 "Routine Control" sendet.

Nach Empfang dieses UDS-Befehls 124 löst die BCU 102 in Schritt 126 den magnetischen Verschluss und signalisiert dies dem Prüfer 104 durch Senden einer Meldung 128.

Eine analoge Befehlsfolge kann genutzt werden, um den magnetischen Verschluss zu arretieren.

Aus Sicherheitsgründen sind in einem beispielhaften Ausführungsbeispiel vorgesehen, dass die BCU 102 den Verschluss ohne Anforderung eines Prüfers 104 öffnet, wenn die BCU 102 eine Gefahrensituation feststellt. In einem anderen beispielhaften Ausführungsbeispiel ist weiter vorgesehen, dass der magnetische Verschluss auch ohne Berechtigung geöffnet werden kann, beispielsweise durch Anwendung mechanischer Gewalt. Bei einem magnetischen Verschluss kann dies erreicht werden, indem die Magnetkraft entsprechend gewählt wird. Ein solcher gewaltsam zu öffnender Verschluss würde eine unberechtigte Öffnung offenkundig machen, ohne ein Öffnen in jedem Fall zu verhindern, was insbesondere für Gefahrensituationen von Wichtigkeit ist. In einer bevorzugten Ausführungsform ist vorgesehen, dass Informationen über ein solches unberechtigtes Öffnen gespeichert werden.

Durch den Einsatz der Erfindung wird gewährleistet, dass das Batteriepack nicht ohne nachgewiesene Berechtigung geöffnet werden kann. Darüber hinaus zeichnet die BCU 102 auf, ob das Batteriepack geöffnet wurde, und in den Fällen eines Öffnens werden Angaben über Zeit, Datum und/oder Kilometerstand gespeichert. Weiterhin werden Informationen über Personen gespeichert, die das Batteriepack berechtigt öffnen. Mithilfe dieses Vorgehens wird es ermöglicht, die Garantieansprüche eines OEM zu bewerten.

### Verschluss- und Überwachungsmechanismus:

Beim Einsatz als Überwachungsgerät wird das Batteriepack nicht nur verriegelt, sondern zusätzlich (oder alternativ) wird ein Öffnen des Batteriepacks in einer beispielhaften Ausführungsform durch die BCU überwacht. Dies wird beispielsweise dadurch erreicht, indem eine bereits vorhandene Hardware-Schaltsperre des Batteriemanagementsystems (BMS) genutzt wird. Als solche Hardware-Schaltsperre kann beispielsweise ein Hochspannungsüberwachungskreis (HVIL) genutzt werden. Eine Hardware-Schaltsperre ermöglicht die Ermittlung von nicht verbundenen, alleinstehenden Kontakten, um zu verhindern, dass Personen in Kontakt mit Hochspannung führenden Leitungen kommen. Diese Hardware-Schaltsperre umfasst einen PWM-Signalgenerator (PWM = Pulsweitenmodulation) des BMS, der eine Reihe von Schleifenkontakten mit seinen Signalen beaufschlagt. Wenn der Hochspannungsanschluss nicht verbunden ist, ist die Kette unterbrochen. Eine solche unterbrochene Kette wird durch die Hardware-Schaltsperre des BMS erkannt, welches in diesem Fall kein PWM-Signal mehr empfängt. In diesem Falle trennt das BMS sofort alle Kontakte. Außerdem werden alle anderen aktiven Komponenten, die in der Lage sind, Hochspannung an den Bus abzugeben, ebenfalls gehindert, Hochspannung an den Bus abzugeben. Somit gewährleistet die Hardware-Schaltsperre, dass das Batteriepack nicht geöffnet werden kann, ohne dass die BCU über das Öffnen des Batteriepacks informiert wird. Um zu vermeiden, dass die BCU-Software ständig aktiv ist, kann für die BCU bei ausgeschalteter Zündung ein Ruhemodus vorgesehen werden. Die BCU-Software-kann-dann durch ein HVIL-Ereignis wieder aufgeweckt werden. Ein solcher Ruhemodus hilft, Energie zu sparen.

Mit diesem Mechanismus kann die BCU jedes Öffnen des Batteriepacks erfassen und aufzeichnen. Die BCU überwacht die Signale der Hardware-Schaltsperre (HVIL-Signale) und erhält so einen Impuls, wenn das Batteriepack geöffnet wird. Nachdem sie den Impuls empfangen hat, speichert die BCU Daten, die das Ereignis beschreiben wie beispielsweise Datum 202, Uhrzeit 204, Kilometerstand 206, eine Prüfer-Kennung 208 oder dergleichen in einem nichtlöschbaren Speicher. Vorzugsweise sollten diese Daten nicht gelöscht werden können, selbst nicht von einem OEM-Prüfer 104.

In der beispielhaften Ausführungsform wird durch die BCU sichergestellt, dass jedes Ereignis "Offenes Batteriepack" detektiert wird und die entsprechenden Daten in dem nichtlöschbaren Speicher abgespeichert werden. Um die Speichernutzung zu optimieren, stellt die BCU einen Ringspeicher 200 von vorgegebener Länge bereit. Beim Speichern neuer Einträge in den Ringspeicher 200, werden die bereits gespeicherten Einträge weitergeschoben, wie es in Figur 2 durch das Bezugszeichen 210 veranschaulicht wird. Wenn der Ringspeicher 200 voll ist, werden die älteren Einträge gelöscht (vgl. Figur 2).

Wenn nun ein OEM ein fehlerhaftes Batteriepack an den Lieferanten sendet, kann der Lieferant überprüfen, ob das Batteriepack durch jemanden geöffnet wurde oder nicht. In dem Fall, dass das Batteriepack geöffnet wurde, kann das Datum 202 und die Uhrzeit 204 des Öffnens aus der BCU ausgelesen werden. Mithilfe dieser Angaben kann der Lieferant feststellen, ob die Gewährleistungsansprüche zu Recht bestehen.

Da es vorkommen kann, dass sich die BCU im Ruhemodus befindet, wenn das Batteriepack durch jemanden geöffnet wird, ist in einer bevorzugten Ausführungsform vorgesehen, dass beim Öffnen ein Wecksignal gesendet wird.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Kraftfahrzeug auch bei grundsätzlich anders gearteten Ausführungen Gebrauch macht

## Patentansprüche

1. Anordnung umfassend mindestens eine elektro-chemische Zelle und ein die mindestens eine elektro-chemische Zelle enthaltendes Gehäuse, wobei das Gehäuse einen Verschluss aufweist, **dadurch gekennzeichnet, dass**
die Anordnung so eingerichtet ist, dass bei verriegeltem Verschluss eine Entnahme oder eine unregistrierte Entnahme einer oder mehrerer der elektro-chemischen Zellen aus dem Gehäuse verhindert wird, wobei zum Entriegeln des Verschlusses eine Authentifizierung erforderlich ist.

2. Anordnung nach Anspruch 1, wobei die Anordnung für eine Überwachung eines Zugangs zu der mindestens einen elektro-chemischen Zelle Mittel zur Dateneingabe und Mittel zur Auswertung eingegebener Daten umfasst.

3. Anordnung nach einem der Ansprüche 2, wobei die Anordnung Mittel zur Authentifizierung in Dialogform umfasst.

4. Anordnung nach einem der Ansprüche 2 bis 3, wobei die Anordnung neben der Möglichkeit für ein Öffnen des Gehäuses nach der Authentifizierung eine Möglichkeit für ein Öffnen des Gehäuses ohne Authentifizierung bereitstellt.

5. Anordnung nach einem der voran stehenden Ansprüche, wobei ein Öffnen des Gehäuses überwacht wird.

6. Anordnung nach einem der Ansprüche 2 bis 5, wobei die Anordnung eine Batteriesteuereinheit (102) umfasst, und zumindest die Authentifizierung und/oder Überwachung des Öffnens durch die Batteriesteuereinheit (102) realisiert oder unterstützt wird.

7. Anordnung nach einem der voran stehenden Ansprüche, wobei der Verschluss als magnetischer Verschluss ausgebildet ist.

8. Kraftfahrzeug mit einem elektrischen Antriebsmotor zum Antreiben des Kraftfahrzeugs umfassend eine Anordnung nach einem der Ansprüche 1 bis 7.

## Claims

1. Arrangement comprising at least one electrochemical cell and a housing that contains the at least one electrochemical cell, wherein the housing comprises a lock, **characterized in that** the arrangement is embodied in such a manner that in the case of an activated lock it is not possible to remove one or several electrochemical cells from the housing nor is it possible to remove said one or several electrochemical cells from the housing without the incident being registered, wherein authentication is required for the purpose of unlocking the lock.

2. Arrangement according to Claim 1, wherein the arrangement for monitoring access to the at least one electrochemical cell comprises means for entering data and means for evaluating the data that has been entered.

3. Arrangement according to either of Claims 1 and 2, wherein the arrangement comprises means for authentication purposes in a dialogue form.

4. Arrangement according to any one of Claims 2 to 3, wherein, in addition to the option for opening the housing once authentication has been provided, the arrangement provides an option for opening the housing without authentication.

5. Arrangement according to any one of the preceding claims, wherein any incident where the housing is opened is monitored.

6. Arrangement according to any one of Claims 2 to 5, wherein the arrangement comprises a battery control unit (102) and at least the authentication procedure and/or even the procedure of monitoring any incident where the housing is opened is achieved or supported by means of the battery control unit (102).

7. Arrangement according to any one of the preceding claims, wherein the lock is embodied as a magnetic lock.

8. Motor vehicle having an electric drive motor for the purpose of driving the motor vehicle comprising an arrangement according to any one of Claims 1 to 7.

## Revendications

1. Dispositif comprenant au moins une cellule électrochimique et un boîtier contenant l'au moins une cellule électrochimique, le boîtier présentant une fermeture, **caractérisé en ce que**
le dispositif est réalisé de telle sorte que lorsque la fermeture est verrouillée, un enlèvement ou un enlèvement non enregistré d'une ou plusieurs des cellules électrochimiques hors du boîtier soit empêché, une authentification étant nécessaire pour le déverrouillage de la fermeture.

2. Dispositif selon la revendication 1, dans lequel le dispositif comprend des moyens d'entrée de données et des moyens d'analyse des données entrées pour une surveillance d'un accès à l'au moins une cellule électrochimique.

3. Dispositif selon l'une quelconque des revendications 1 ou 2, dans lequel le dispositif comprend des moyens pour l'authentification sous forme de dialogue.

4. Dispositif selon l'une quelconque des revendications 2 à 3, dans lequel le dispositif fournit, en plus de la possibilité d'ouvrir le boîtier après l'authentification, une possibilité d'ouvrir le boîtier sans authentification.

5. Dispositif selon l'une quelconque des revendications précédentes, dans lequel l'ouverture du boîtier est surveillée.

6. Dispositif selon l'une quelconque des revendications 2 à 5, dans lequel le dispositif comprend une unité de commande de batterie (102) et au moins l'authentification et/ou la surveillance de l'ouverture est/sont réalisée(s) ou assistée(s) par l'unité de commande de batterie (102).

7. Dispositif selon l'une quelconque des revendications précédentes, dans lequel la fermeture est réalisée sous forme de fermeture magnétique.

8. Véhicule automobile avec un moteur d'entraînement électrique pour l'entraînement du véhicule automobile, comprenant un dispositif selon l'une quelconque des revendications 1 à 7.
